# EUROPÄISCHE PATENTSCHRIFT

(11) **EP 3 269 578 B1**
(45) Veröffentlichungstag und Bekanntmachung des Hinweises auf die Patenterteilung: **23.09.2020**
(21) Anmeldenummer: 17175996.2
(22) Anmeldetag: 14.06.2017
(51) Int. Cl.: B60K 35/00, B60K 37/06

(54) **VERFAHREN ZUM BETREIBEN EINES FAHRZEUGINFORMATIONSSYSTEMS MIT ZUMINDEST EINER ERSTEN UND EINER ZWEITEN ANZEIGEFLÄCHE UND FAHRZEUGINFORMATIONSSYSTEM**
METHOD FOR OPERATING A VEHICULAR INFORMATION SYSTEM WITH AT LEAST A FIRST AND A SECOND DISPLAY AREA AND VEHICLE INFORMATION SYSTEM
PROCÉDÉ DE FONCTIONNEMENT D'UN SYSTÈME D'INFORMATIONS DE VÉHICULE COMPRENANT AU MOINS UNE PREMIÈRE ET UNE SECONDE SURFACE D'AFFICHAGE ET SYSTÈME D'INFORMATIONS DE VÉHICULE

(30) Priorität: 15.07.2016 DE 102016113112
(43) Veröffentlichungstag der Anmeldung: 17.01.2018
(73) Patentinhaber: VOLKSWAGEN AKTIENGESELLSCHAFT, 38440 Wolfsburg (DE)
(72) Erfinder: CENGIL, Sükrü, 30938 Burgwedel (DE); BRAUN, Anna, 38114 Braunschweig (DE)
(74) Vertreter: Reitstötter Kinzebach

(56) Entgegenhaltungen:
- WO-A1-2015/071961
- JP-A- 2007 064 761
- JP-A- 2012 240 467
- US-A1- 2012 218 295

## Beschreibung

Die vorliegende Erfindung betrifft ein Verfahren zum Betreiben eines Fahrzeuginformationssystems mit zumindest einer ersten und einer zweiten Anzeigefläche. Die Erfindung betrifft ferner ein Fahrzeuginformationssystem. Ein solches System und das entsprechende Verfahren sind aus der WO 2015/071961 A1 bekannt.

Zur Verbesserung der Sicherheit und des Komforts beim Fahren mit einem Fahrzeug wird einem Nutzer eines Fahrzeugs eine Fülle von Informationen bereitgestellt, beispielsweise um die Überwachung der Fahrt und des Fahrzeugbetriebs zu erleichtern, über die Tätigkeit von Fahrerassistenzsystemen zu informieren oder um die Bewältigung organisatorischer Nebenaufgaben zu erleichtern. Dabei werden in modernen Fahrzeugen zunehmend komplexe Rechensysteme integriert, die bei der Inbetriebnahme des Fahrzeugs und zu Beginn einer Fahrt gestartet und hochgefahren werden müssen. Bei bekannten Systemen treten hierbei häufig unerwünschte Verzögerungen und Wartezeiten auf, ehe der Fahrer die gewünschte Bedienung vornehmen oder bestimmte Informationen abrufen kann. Zudem kann die Verwendung mehrerer Anzeigeflächen dazu führen, dass die Anzeigen in einem Fahrzeug uneinheitlich wahrgenommen werden und das Erfassen umfassender Informationen erschwert wird.

Der vorliegenden Erfindung liegt die Aufgabe zugrunde, ein Verfahren zum Betreiben eines Fahrzeuginformationssystems und ein Fahrzeuginformationssystem der oben genannten Art bereitzustellen, bei denen auf besonders schnell erfassbare Weise die Einheitlichkeit mehrerer Anzeigeflächen innerhalb des Fahrzeuginformationssystems erfassbar ist. Erfindungsgemäß wird diese Aufgabe durch ein Verfahren mit den Merkmalen des Anspruchs 1 und ein Fahrzeuginformationssystem mit den Merkmalen des Anspruchs 15 gelöst. Vorteilhafte Ausgestaltungen und Weiterbildungen ergeben sich aus den abhängigen Ansprüchen.

Bei dem erfindungsgemäßen Verfahren der eingangs genannten Art werden nacheinander ein Aktivierungssignal und ein Übergangssignal empfangen. In Abhängigkeit von dem Aktivierungssignal und dem Übergangssignal werden Grafikdaten einer Aktivierungsanimation mit einer ersten und einer zweiten Darstellung erzeugt sowie durch die erste und zweite Anzeigefläche angezeigt. Dabei wird nach dem Empfangen des Aktivierungssignals ein Erscheinen der ersten Darstellung ausgegeben, wobei die erste Darstellung ein erstes Grafikobjekt umfasst. Ferner wird nach dem Empfangen des Übergangssignals ein Verschwinden der ersten Darstellung und ein Erscheinen der zweiten Darstellung ausgegeben, wobei das Erscheinen der zweiten Darstellung einen Bewegungseffekt umfasst. Dabei wird durch den Bewegungseffekt eine Bewegung von der ersten Anzeigefläche zu der zweiten Anzeigefläche dargestellt.

Anhand der Aktivierungsanimation wird vorteilhafterweise deutlich signalisiert, dass die beiden Anzeigeflächen in einem Fahrzeuginformationssystem auch inhaltlich miteinander verbunden sind. Insbesondere wird dies durch das Anzeigen einer Aktivierungsanimation erreicht, die abhängig von zumindest zwei Signalen, nämlich dem Aktivierungssignal und dem Übergangssignal, einen Übergang zwischen der ersten und der zweiten Darstellung erfassbar macht. Die Signale können dabei als erster und zweiter Trigger verstanden werden. Ferner kann die Aktivierungsanimation als Warteanimation gebildet werden, um eine Wartezeit für den Nutzer zu überbrücken und eine Tätigkeit des Systems zu signalisieren.

Erfindungsgemäß ist zumindest eine erste und eine zweite Anzeigeflächen vorgesehen, wobei allerdings auch mehr Anzeigeflächen verwendet werden können. Die Anzeigeflächen sind insbesondere beabstandet voneinander angeordnet. Ferner können die Anzeigeflächen fest verbaut sein oder bewegbar sein, beispielsweise schwenkbar. Ferner können die Positionen der Anzeigeflächen, insbesondere relativ zueinander, bei der Aktivierungsanimation berücksichtigt werden.

Das Aktivierungssignal wird dabei zeitlich vor dem Übergangssignal empfangen, wobei insbesondere vorgesehen sein kann, dass das Übergangssignal erst im Anschluss an das volle Erscheinen der ersten Darstellung empfangen wird oder dass die Wirkung des Übergangssignals auf die Darstellung erst nach dem Erscheinen der ersten Darstellung sichtbar wird. Insbesondere ist dabei eine bestimmte Zeitspanne zwischen den beiden Signalen vorgesehen. Zum Erzeugen der Aktivierungsanimation genügt es dabei insbesondere, dass das Aktivierungssignal empfangen wurde, während das Übergangssignal auch während der Ausgabe der Aktivierungsanimation empfangen werden kann. Beispielsweise kann ein Teil der Aktivierungsanimation mit dem Empfang des Übergabesignals koordiniert, das heißt zum Beispiel gleichzeitig oder zeitlich versetzt dazu, ausgegeben werden.

Die Bildung der Aktivierungsanimation in Abhängigkeit von dem Aktivierungssignal und dem Übergangssignal kann auf verschiedene Weise erfolgen. Beispielsweise können die Signale verschiedene Ausprägungen aufweisen und die Grafikdaten können in Abhängigkeit von diesen Ausprägungen erzeugt werden. Zudem kann vorgesehen sein, dass die jeweiligen Zeitpunkte des Empfangs der beiden Signale berücksichtigt werden. Erfindungsgemäß wird das Übergangssignal empfangen, wenn ein Annäherungsvorgang, ein Entriegelungsvorgang, ein Türöffnen, ein Einsteigen oder Setzen eines Nutzers oder ein Starten eines Fahrzeugs erfasst wird.

Das Empfangen der Signale kann auf verschiedene, an sich bekannte Arten erfolgen. Beispielsweise kann eine Bedienhandlung eines Nutzers erfasst werden oder es kann ein bestimmter Zustand des Fahrzeugs oder einer seiner Einrichtungen erfasst werden. Ferner können Sensoren des Fahrzeugs verwendet werden, um das Aktivierungs- und/oder Übergangssignal zu erzeugen.

Gemäß einer Ausgestaltung des erfindungsgemäße Verfahrens wird das Aktivierungssignal empfangen, wenn ein Annäherungsvorgang, ein Entriegelungsvorgang, ein Türöffnen, ein Einsteigen oder Setzen eines Nutzers oder ein Starten eines Fahrzeugs erfasst wird. Dadurch kann die Aktivierungsanimation vorteilhafterweise mit besonders wichtigen Schritten zur Vorbereitung einer Fahrt mit dem Fahrzeug synchronisiert werden. Zudem kann anhand derart empfangener Signale bestimmt werden, ob sich der Fahrer in einer bestimmten Phase der Vorbereitung auf die Fahrt mit dem Fahrzeug befindet.

Gemäß einer Ausbildung umfasst das Erscheinen der ersten und/oder zweiten Darstellung ein Einblenden. Dadurch kann vorteilhafterweise ein fließender Übergang zwischen verschiedenen Darstellungen erzeugt werden, während das Erfassen der ausgegebenen Daten möglicherweise durch harte Übergänge erschwert würde. Der Nutzer kann auf diese Weise eine Darstellung leicht erfassen, ohne sich nach dem Übergang von der ersten zur zweiten Darstellung völlig neu orientieren zu müssen.

Unter einem "Einblenden" wird dabei insbesondere verstanden, dass für ein Objekt einer Darstellung ein Übergang von einer dunkleren zu einer helleren Anzeige erzeugt wird. In analoger Weise können weitere grafische Effekte genutzt werden, etwa eine Veränderung der Transparenz, des Kontrastes, der Farbgebung oder weiterer Eigenschaften. Insbesondere kann ein Auftauchen des Objekts gegenüber einem Hintergrund dargestellt werden.

Analog dazu kann vorgesehen sein, dass das Verschwinden der ersten und/oder zweiten Darstellung ein Ausblenden umfasst. Dieses kann insbesondere im Vergleich mit dem Einblenden als umgekehrter graphischer Effekt verstanden werden, etwa durch einen Übergang von einer hellen zu einer dunklen Darstellung oder durch die Veränderung weiterer grafischer Eigenschaften der Darstellung oder dargestellter Objekte.

Das Erscheinen und Verschwinden der ersten und/oder zweiten Darstellung kann dabei für die jeweilige Darstellung als Ganzes oder in analoger Weise für einzelne Elemente der Darstellung erzeugt werden. Beispielsweise können bei einem Verschwinden einer Darstellung einzelne dargestellte Elemente der Darstellung nacheinander ausgeblendet werden. Ferner können verschiedene grafische Effekte auf verschiedene Elemente angewandt werden, etwa ein Übergang von hell nach dunkel für ein erstes und ein Übergang von geringer zu starker Transparenz für ein weiteres Element der Darstellung.

Alternativ oder zusätzlich können weitere Darstellungsformen zum Erzeugen eines Erscheinens und/oder Verschwindens der Darstellungen verwendet werden, etwa eine Bewegung von Elementen des jeweiligen Darstellung, etwa im Sinne eines "Wegfliegens" oder "Einfliegens" von Elementen der Darstellung, wobei eine Bewegung der Elemente von einem Bereich außerhalb der anzeigbaren Darstellung her oder eine Bewegung aus der anzeigbaren Darstellung heraus dargestellt wird.

Das erste Grafikobjekt wird auf an sich bekannte Weise gebildet und kann insbesondere eine Marke umfassen, insbesondere ein Logo oder Zeichen eines Unternehmens. Dadurch kann vorteilhafterweise eine besonders gute Wiedererkennbarkeit und Integration in ein weiteres Ausbildungskonzept erreicht werden. Dabei kann insbesondere eine Marke eines Hersteller des Fahrzeugs oder des Fahrzeuginformationssystems dargestellt werden. Ferner kann die Marke dynamisch dargestellt werden, etwa mittels einer Bewegung von Elementen der Darstellung.

Zudem kann vorgesehen sein, dass die erste Darstellung einstellbar ist. Beispielsweise kann sie von dem Nutzer konfiguriert werden und/oder es kann eine personalisierte Darstellung für den Nutzer erzeugt und ausgegeben werden.

Gemäß einer Ausbildung wird zum Erzeugen der Grafikdaten der ersten Darstellung eine Animationssequenz von einem nichtflüchtigen Speichermedium abgerufen. Dadurch kann vorteilhafterweise eine besonders schnelle und einfach zu verarbeitende Anzeige der ersten Darstellung erfolgen.

Insbesondere ist dabei vorgesehen, dass eine vorgegebene Anzeige als erste Anzeige ausgegeben wird, wobei beispielsweise ein Hochfahren komplexerer Systeme, beispielsweise eines aufwendigeren Rechnersystems, nicht notwendig ist. Zudem kann das Erscheinen der ersten Darstellung und insbesondere auch ein erster Abschnitt der Aktivierungsanimation fest vorgegeben sein.

Der erfindungsgemäß vorgesehene Bewegungseffekt kann auf unterschiedliche Weisen gebildet werden. Insbesondere ist dabei ein grafischer Effekt vorgesehen, der eine Ortsänderung in Abhängigkeit von der Zeit umfasst. Dabei kann der Bewegungseffekt insbesondere so gebildet sein, dass die Geometrie der Anordnung der ersten und zweiten Anzeigefläche im Fahrzeug berücksichtigt wird. Dabei wird eine Bewegung von der ersten zur zweiten Anzeigefläche dargestellt, wobei zusätzlich dazu auch eine Bewegung in eine andere Richtung dargestellt werden kann, etwa von der zweiten Anzeigefläche weg.

Beispielsweise kann eine Ausbreitung eines Impulses dargestellt werden, indem eine räumliche Fortpflanzung einer bestimmten grafische Eigenschaft der Darstellung über die Fläche der ersten und/oder zweiten Anzeigefläche dargestellt wird. Dabei kann die grafische Eigenschaft der Darstellung verschiedene Parameter der grafischen Darstellung betreffen, zum Beispiel eine Helligkeit. Alternativ oder zusätzlich kann der Bewegungseffekt eine Verschiebung und/oder eine Drehung umfassen. Ferner kann vorgesehen sein, dass ein Ausbreiten dargestellt wird, wobei eine Erstreckung einer Darstellung und/oder eine Eigenschaft einer Darstellung über einen bestimmten Flächenbereich erzeugt wird.

Gemäß einer weiteren Ausbildung wird bei dem Bewegungseffekt eine Bewegung eines Bereichs erhöhter Helligkeit dargestellt. Dadurch kann der Bewegungseffekt vorteilhafterweise besonders leicht erfassbar dargestellt werden. Beispielweise kann auf diese Weise eine Ausbreitung eines Lichtimpulses dargestellt werden. Ferner kann analog dazu eine Bewegung eines Bereichs mit gegenüber der Umgebung erniedrigter Helligkeit ausgegeben werden oder es kann eine Bewegung eines hinsichtlich einer anderen Eigenschaft kontrastierenden Bereichs dargestellt werden.

Gemäß einer weiteren Ausbildung wird das erste Grafikobjekt der ersten Darstellung durch die erste Anzeigefläche angezeigt. Dadurch wird vorteilhafterweise eine erste Ausgabe von Daten mittels der ersten Anzeigefläche ermöglicht, insbesondere noch bevor anhand des Übergangssignals der Übergang zur zweiten Darstellung vollzogen worden ist. Insbesondere ist dabei vorgesehen, dass bei der ersten Anzeige die zweite Anzeigefläche nicht zur Ausgabe genutzt wird, sondern keine Anzeige ausgibt oder eine bestimmte andere Anzeige ausgibt, die zum Beispiel unabhängig von der ersten Anzeige gebildet wird.

Gemäß einer Weiterbildung wird die zweite Darstellung durch die erste und die zweite Anzeigefläche angezeigt. Dadurch können vorteilhafterweise anhand der zweiten Darstellung Daten sowohl mittels der ersten, als auch der zweiten Anzeigefläche Daten ausgegeben werden. Dadurch kann beispielsweise eine größere Fläche genutzt werden, um eine größere Informationsmenge strukturiert und übersichtlich auszugeben. Ferner kann ein integriertes Darstellungskonzept verwendet werden, in dem die Anzeigeflächen verschiedene ergänzende Informationen ausgeben.

Gemäß einer Ausbildung umfasst die zweite Darstellung ein erstes und ein zweites Anzeigeobjekt, wobei die Anzeigeobjekte jeweils eine Skala und ein Zeigerelement aufweisen. Dadurch können vorteilhafterweise Parameter angezeigt werden.

Dabei sind Anzeigeobjekte grafische Objekte, durch die eine Anzeige eines Wertes eines Parameters ausgegeben werden kann. Beispielsweise können dazu Rundinstrumente, beziehungsweise Darstellungen nach Art analoger Rundinstrumente, verwendet werden, die auch als "Tuben" bezeichnet werden können. Anhand solcher Tuben werden typischerweise Parameter wie die Geschwindigkeit, Drehzahl oder eine Betriebsart eines Fahrzeugs angezeigt. Insbesondere ist dabei vorgesehen, dass die Anzeigeobjekte durch die erste Anzeigefläche angezeigt werden.

Gemäß einer weiteren Ausbildung werden ferner Betriebsdaten eines Fahrzeugs erfasst und die zweite Darstellung wird in Abhängigkeit von den erfassten Betriebsdaten erzeugt. Dies erlaubt vorteilhafterweise eine Nutzung der Darstellung zur Ausgabe relevanter Betriebsdaten für den Nutzer.

Die Anzeige der Betriebsdaten kann dabei auf an sich bekannte Weise erfolgen, beispielsweise mittels der Tuben und/oder anderer grafischer Elemente zur Datenausgabe. Es können etwa ein Ladungs- und/oder Füllzustand eines Energiespeichers, eine Umgebungs- und/oder Innentemperatur angezeigt werden. Ferner können Informationen betreffend eines Rechnersystems angezeigt werden, etwa über verfügbare und/oder aktuell laufende Anwendungsprogramme, beispielweise eines Medienabspielprogramms. Insbesondere können dabei auch Betriebsdaten weiterer Einrichtungen berücksichtigt werden, die mit dem Fahrzeug in datentechnischer Verbindung stehen, beispielsweise eines mobilen Nutzergeräts wie eines Mobiltelefons oder eines mobilen Computers.

Gemäß einer Weiterbildung ist die erste Anzeigefläche von einem Kombiinstrument eines Fahrzeugs und/oder die zweite Anzeigefläche von einem Mitteldisplay des Fahrzeugs umfasst. Dadurch werden vorteilhafterweise Displays genutzt, die typischerweise in Fahrzeugen vorgesehen sind und durch die insbesondere dem Daten leicht erfassbar ausgegeben werden können. Insbesondere kann dabei vorgesehen sein, dass die erste Darstellung durch das Kombiinstrument ausgegeben wird, während bei dem Übergang zu der zweiten Darstellung ein Ausbreiten der Anzeige auf das Mitteldisplay angezeigt wird.

Zudem kann vorgesehen sein, dass eine oder mehrere der Anzeigeflächen von einer mobilen Einheit umfasst sind, beispielsweise von einem Mobiltelefon oder einem mobilen Rechner des Nutzers. Auch hier kann die Aktivierungsanimation in analoger Weise ausgegeben werden.

Gemäß einer Ausbildung wird während des Anzeigens der Aktivierungsanimation ein Startvorgang eines Rechners durchgeführt, wobei die Aktivierungsanimation in Abhängigkeit von einem zeitlichen Ablauf des Startvorgangs erzeugt und angezeigt wird. Insbesondere kann dadurch die Aktivierungsanimation so erzeugt werden, dass die Ausgabe der zweiten Darstellung bei Abschluss des Startvorgangs abgeschlossen ist. Die Aktivierungsanimation kann dadurch vorteilhafterweise als eine Warteanimation verwendet werden, um dem Nutzer das Warten bis zur vollständigen Einsatzbereitschaft des Rechners besser zu vermitteln.

Insbesondere kann so erreicht werden, dass der Startvorgang, etwas das Hochfahren des Rechners, nicht nur als störende Verzögerung im Ablauf empfunden wird, sondern dass der Nutzer erkennt, dass das System bereits aktiv ist und der vollständig hochgefahrene Zustand hergestellt wird. Die Zeitdauer zwischen dem Starten des Systems und dem Erreichen eines vollständig einsatzbereiten Zustands kann dabei von verschiedenen Umständen abhängen, insbesondere von zum Laden von Betriebsdaten sowie zum automatischen Testen von Systemkomponenten benötigten Zeit. Während dieser Dauer wird typischerweise ein leerer Bildschirm oder eine Darstellung ausgegeben, etwa eine Darstellung einer Sanduhr, sodass der Nutzer nicht erkennen kann, wie weit der Startvorgang fortgeschritten ist. Indem die Aktivierungsanimation in Abhängigkeit von einem zeitlichen Ablauf des Startvorgangs erzeugt wird, kann die Wartezeit dem Nutzer dagegen besser verständlich gemacht werden.

Dabei kann während des Hochfahrens der zeitliche Ablauf bestimmt werden, etwa anhand des Abschließens bestimmter Abschnitte des Hochfahrvorgangs. Ferner kann eine bestimmte Zeitdauer für das Hochfahren vorgesehen sein, sodass der zeitliche Ablauf er Aktivierungsanimation anhand eines fest vorgegebenen zeitlichen Ablaufs erzeugt werden kann.

Gemäß einer weiteren Ausbildung umfasst die zweite Darstellung zumindest ein Anzeigeobjekt und einen Anwendungsbereich, wobei der Anwendungsbereich Anwendungsflächen umfasst. Damit können vorteilhafterweise klar abgegrenzte Bereiche gebildet werden, in denen eine Ausgabe bestimmter Daten erfolgen kann.

Dabei kann das zumindest eine Anzeigeobjekt nach der oben beschriebenen Art eines Rundinstruments gebildet sein. Als Anwendungsbereich kann eine Fläche der Darstellung vorgesehen sein, durch die weitere Daten ausgegeben werden können, beispielsweise für eine Anzeige und Bedienung von Anwendungsprogrammen, wobei die Anwendungsprogramme durch einen Rechner des Fahrzeugs als auch eines Mobilgeräts ausgeführt werden können.

Beispielsweise kann der Anwendungsbereich als Hintergrunddarstellung ausgebildet sein. Insbesondere kann ein von zwei Anzeigeobjekten, die im Vordergrund dargestellt werden, gebildeter Zwischenraum, etwa zwischen zwei Rundinstrumenten, für die Anzeige der Hintergrunddarstellung genutzt werden. Dadurch kann etwa auf einer Anzeigefläche eines Kombiinstruments ein von zwei dargestellten Rundinstrumenten eingeschlossener Zwischenraum als Anwendungsfläche genutzt werden; ferner kann die Anwendungsfläche auch zumindest teilweise innerhalb der Rundinstrumente angeordnet sein. Zudem kann der Anwendungsbereich auf der zweiten Anzeigefläche, insbesondere einem Mitteldisplay, ausgebildet sein.

Die Darstellung der Daten der Anwendungsprogramme erfolgt anhand von Anwendungsflächen, wobei ein bestimmter Bereich der Fläche des Anwendungsbereichs den Daten eines bestimmten Anwendungsprogramms zugeordnet ist. Insbesondere ist der einem Anwendungsprogramm zugeordnete Bereich der Fläche als Anwendungsfläche ausgebildet, insbesondere als Kachel, Widget oder Fenster.

Gemäß einer Weiterbildung werden die Anwendungsflächen der zweiten Darstellung Anwendungen zugeordnet und nach dem Erscheinen der zweiten Darstellung werden in den Anzeigeflächen Ausgabedaten der Anwendungen angezeigt. Dadurch werden vorteilhafterweise Ausgabedaten von Anwendungen, das heißt Anwendungsprogrammen, mittels der zweiten Darstellung ausgegeben.

Insbesondere kann vorgesehen sein, dass die zweite Darstellung in zwei Stufen erscheint: In einer ersten Stufe können die Anwendungsflächen dargestellt werden, wobei insbesondere vorgesehen ist, dass in der ersten Stufe noch keine spezifischen Inhalte der den Anwendungsflächen zugeordneten Anwendungsprogramme ausgegeben werden. Beispielsweise kann eine Struktur der Flächenaufteilung nach Art eines Gerüsts angezeigt werden. Beispielsweise erfolgt die Darstellung in dieser ersten Stufe so, dass die Abmessungen der Anwendungsflächen erfassbar sind, etwa anhand von Umrandungen der jeweiligen Anwendungsflächen. In einer zweiten Stufe folgt dann die Anzeige von Ausgabedaten der jeweils zugeordneten Anwendungsprogramme innerhalb der Anwendungsflächen.

Zum Beispiel kann in der ersten Stufe eine Darstellung einer Kachelstruktur oder Schablone erfolgen, durch welche die Umrisse der Anwendungsflächen erkennbar sind. Dabei kann vorgesehen sein, dass bereits eine Beziehung zu den jeweils zugeordneten Anwendungsprogrammen hergestellt wird, beispielsweise mittels einer fest vorgegebenen Darstellung. Ferner kann in der ersten Stufe eine dynamische Darstellung erfolgen, etwa mittels einer Bewegung oder eines dargestellten Lichteffekts der Anwendungsflächen. Beispielsweise kann eine Bewegung einer dargestellten Hervorhebung ausgegeben werden.

In der zweiten Stufe kann dann ein Füllen der Anwendungsflächen mit Ausgabedaten der Anwendungsprogramme erfolgen, beispielsweise indem eine dynamisch von einem Anwendungsprogramm erzeugte Darstellung im Bereich der zugeordneten Anwendungsfläche ausgegeben wird. Auch hier kann vorgesehen sein, dass ferner eine Bewegung oder ein dargestellter Lichteffekt ausgegeben wird.

Das erfindungsgemäße Fahrzeuginformationssystem umfasst eine Empfangseinheit, durch die ein Aktivierungssignal und ein Übergangssignal empfangbar sind, sowie eine Grafikeinheit, durch die in Abhängigkeit von dem Aktivierungssignal und dem Übergangssignal Grafikdaten einer Aktivierungsanimation mit einer ersten und einer zweiten Darstellung erzeugbar sind. Es umfasst ferner eine erste und eine zweite Anzeigefläche, durch welche die Grafikdaten anzeigbar sind. Dabei ist nach dem Empfangen des Aktivierungssignals ein Erscheinen der ersten Darstellung ausgebbar, wobei die erste Darstellung ein erstes Grafikobjekt umfasst, und nach dem Empfangen des Übergangssignals ist ein Verschwinden der ersten Darstellung und ein Erscheinen der zweiten Darstellung ausgebbar, wobei das Erscheinen der zweiten Darstellung einen Bewegungseffekt umfasst. Dabei ist durch den Bewegungseffekt eine Bewegung von der ersten Anzeigefläche zu der zweiten Anzeigefläche darstellbar.

Das erfindungsgemäße Fahrzeuginformationssystem ist insbesondere ausgebildet, das vorstehend beschriebene erfindungsgemäße Verfahren zu implementieren. Das Fahrzeuginformationssystem weist somit dieselben Vorteile auf wie das erfindungsgemäße Verfahren.

Die Erfassung des Aktivierungssignals und des Übergangssignals erfolgt dabei auf an sich bekannte Weise, wobei insbesondere eine Schnittstelle zu einer Einrichtung des Fahrzeugs vorgesehen ist, durch die ein erfasstes Signal an das Fahrzeuginformationssystem übertragen werden kann.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Fahrzeuginformationssystems,
- Figuren 2A bis 2F: zeigen ein Ausführungsbeispiel einer durch das erfindungsgemäße Verfahren erzeugten Anzeige auf einer Anzeigefläche und
- Figuren 3A bis 3G: zeigen ein Ausführungsbeispiel einer durch das erfindungsgemäße Verfahren erzeugten Anzeige auf zwei Anzeigeflächen.

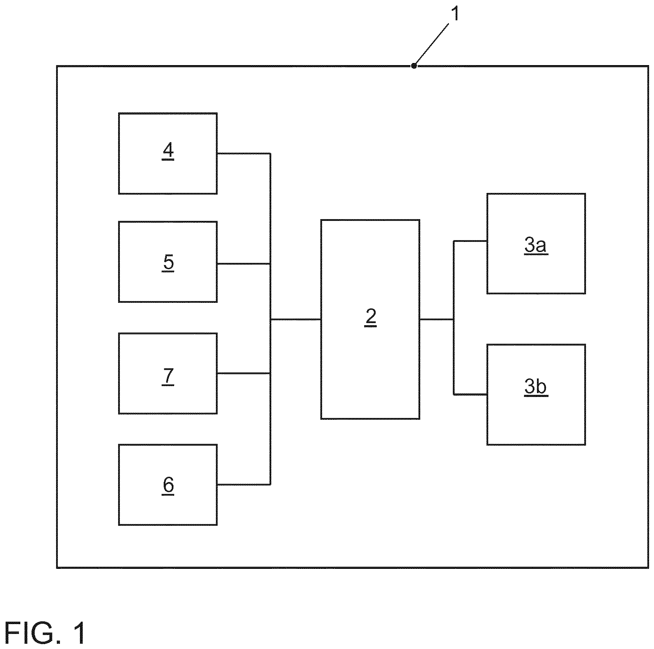

Mit Bezug zu Figur 1 wird ein Fahrzeug mit einem Ausführungsbeispiel des erfindungsgemäßen Fahrzeuginformationssystems erläutert.

Ein Fahrzeug 1 umfasst eine erste Anzeigefläche 3a und eine zweite Anzeigefläche 3b. In dem Ausführungsbeispiel ist die erste Anzeigefläche 3a von dem Kombiinstrument des Fahrzeugs 1 umfasst, während die zweite Anzeigefläche 3b von einem Mitteldisplay des Fahrzeugs 1 umfasst ist. Die Anzeigeflächen 3a, 3b sind mit einer Steuereinheit 2 gekoppelt. Mit der Steuereinheit 3 sind ferner eine Empfangseinheit 4, eine Grafikeinheit 5, ein Rechner 6 und ein nichtflüchtiges Speichermedium 7 gekoppelt.

Mit Bezug zu Figur 1 wird ein Ausführungsbeispiel des erfindungsgemäßen Verfahrens erläutert. Dabei wird von dem oben beschriebenen erfindungsgemäßen Fahrzeuginformationssystem ausgegangen.

Durch die Empfangseinheit 4 wird in einem ersten Schritt ein Aktivierungssignal empfangen. In dem Ausführungsbeispiel ist vorgesehen, dass das Aktivierungssignal durch eine Einrichtung des Fahrzeugs 1 erzeugt wird, welche ein Entriegeln des Fahrzeugs 1 detektiert. In weiteren Ausführungsbeispielen lösen andere Ereignisse und Zustände das Aktivierungssignal aus, beispielsweise ein Öffnen einer Tür des Fahrzeugs oder eine Annäherung eines Fahrers an das Fahrzeug 1. Zudem kann das Aktivierungssignal alternativ oder zusätzlich anhand anderer Ereignisse erzeugt werden.

Bei dem Ausführungsbeispiel ist vorgesehen, dass anhand des Aktivierungssignals auch ein Startvorgang des Rechners 6 durchgeführt wird, insbesondere ein Hochfahren des Rechners 6. Dabei wird laufend erfasst, wie weit das Hochfahren abgeschlossen ist und wie lange der Startvorgang noch dauern wird. Im Verlauf der Hochfahrens werden Ausgabedaten von Anwendungsprogrammen des Rechners 6 geladen und/oder neu erzeugt, die anschließend angezeigt werden können.

In Abhängigkeit von dem Aktivierungssignal erzeugt die Grafikeinheit 5 Grafikdaten einer ersten Darstellung, die anschließend durch die Anzeigeflächen 3a, 3b ausgegeben wird. Dabei ist in dem Ausführungsbeispiel vorgesehen, dass die erste Darstellung lediglich zu einer Anzeige auf der ersten Anzeigefläche 3a führt, während die zweite Anzeigefläche 3b dunkel bleibt. Die erste Anzeige ist unten im Detail erläutert.

In einem weiteren Schritt wird durch die Empfangseinheit 4 ein Übergangssignal empfangen. Auch das Übergangssignal kann, analog zu den obigen Erläuterungen betreffend das Aktivierungssignal, auf verschiedene Weisen empfangen werden. Beispielsweise kann das Übergangssignal erzeugt werden, wenn ein Schließen einer Fahrertür des Fahrzeugs 1 oder ein Setzen auf einen Fahrersitz detektiert wird. Zudem kann das Übergangssignal alternativ oder zusätzlich anhand anderer Ereignisse erzeugt werden. Zudem kann das Übergangssignal automatisch erzeugt werden, etwa nach Ablauf einer bestimmten Zeitspanne oder in Abhängigkeit von dem Fortschritt des Startvorgangs des Rechners 6.

In Abhängigkeit von dem Übergangssignal erzeugt die Grafikeinheit 5 Grafikdaten einer zweiten Darstellung, die anschließend durch die Anzeigeflächen 3a, 3b ausgegeben wird. Dabei ist in dem Ausführungsbeispiel vorgesehen, dass die zweite Darstellung verteilt auf die erste 3a und zweite Anzeigefläche 3b erfolgt. In dem Ausführungsbeispiel werden Betriebsdaten des Fahrzeugs 1 erfasst und die zweite Darstellung wird in Abhängigkeit von den erfassten Betriebsdaten erzeugt. Die Betriebsdaten können dabei in einem weiten Sinne alle Informationen über den Betrieb des Fahrzeugs 1 betreffen, beispielsweise Daten über die Bewegung des Fahrzeugs 1 oder über Anwendungsprogramme, die durch den Rechner 6 ausgeführt werden. Auch die zweite Anzeige ist unten im Detail erläutert.

Das Erscheinen der ersten und/oder zweiten Darstellung erfolgt durch ein Einblenden, wobei beginnend mit einem dunklen Bildschirm der ersten Anzeigefläche 3a die jeweilige Darstellung durch kontinuierliche Erhöhung der Helligkeit erscheint. Dies wird mittels einer entsprechenden Animationssequenz dargestellt. Dabei werden alternativ oder zusätzlich andere an sich bekannte Verfahren genutzt, um den Ablauf des Erscheinens der Darstellungen anzuzeigen, etwa durch ein separates Erscheinen von Elementen, aus denen die Darstellungen sich dann zusammenzusetzen scheinen.

In dem Ausführungsbeispiel ist vorgesehen, dass zum Erzeugen der Grafikdaten der ersten Darstellung eine Animationssequenz von dem nichtflüchtigen Speichermedium 7 abgerufen wird. Das heißt, die Animationssequenz, die beim Erscheinen der ersten Darstellung ausgegeben wird, muss nicht bei jedem Ausführen des Verfahrens neu erzeugt werden, sondern sie liegt bereits vor und muss nur noch in geeigneter Form geladen und abgespielt werden.

Nach dem Empfang des Übergangssignals verschwindet die erste Darstellung und die zweite Darstellung erscheint. Dabei wird zudem ein Übergang dargestellt, der wiederum eine Animationssequenz umfasst, an deren Ende die Anzeige der vollständigen zweiten Darstellung steht. Insbesondere wird der Übergang so gebildet, dass er sich im Wesentlichen über die Zeit des Hochfahrens des Rechners 6 erstreckt.

Auch hier kann wenigstens teilweise ein Abruf einer Animationssequenz von dem nichtflüchtigen Speichermedium 7 erfolgen, wobei damit insbesondere die erforderliche Rechenkapazität verringert werden kann.

In weiteren Ausführungsbeispielen kann vorgesehen sein, dass verschiedene Ausprägungen des Aktivierungssignals und/oder Übergangssignals empfangen werden können, beispielsweise können verschiedene Ereignisse zur Erzeugung der Signale führen oder es kann ein bestimmter Fahrer detektiert werden. Dabei kann ferner vorgesehen sein, dass sich die Erzeugung der ersten und/oder zweiten Darstellung und/oder des Übergangs unterscheidet und beispielsweise eine personalisierte und auf den Fahrer abgestimmte Ausgabe erzeugt wird.

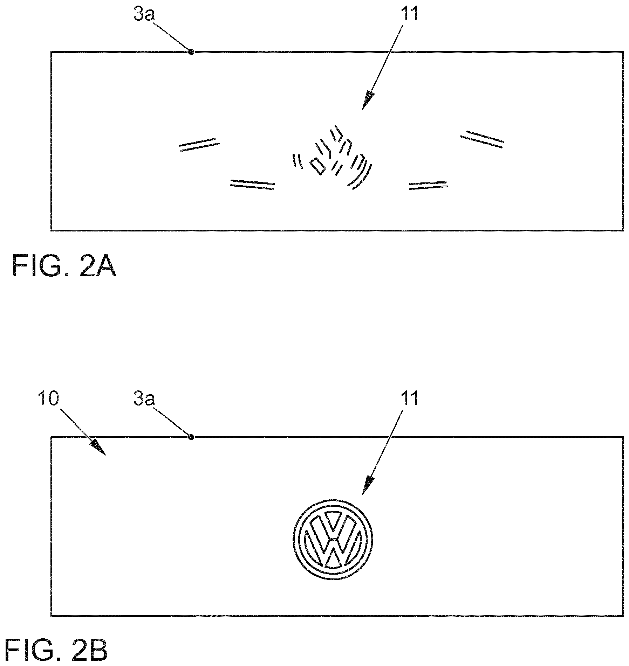

Mit Bezug zu den Figuren 2A bis 2F wird ein Ausführungsbeispiel einer durch das erfindungsgemäße Verfahren erzeugten Anzeige auf einer Anzeigefläche erläutert. Dabei wird von dem oben beschriebenen erfindungsgemäßen Fahrzeuginformationssystem und dem erfindungsgemäßen Verfahren zu seinem Betrieb ausgegangen.

Nach dem Empfangen des Aktivierungssignals werden durch die Grafikeinheit 5 Grafikdaten der ersten Darstellung 10 erzeugt und ausgegeben. Bei dem dargestellten Ausführungsbeispiel ist vorgesehen, dass bei der ersten Darstellung 10 lediglich eine Anzeige auf der ersten Anzeigefläche 3a erfolgt, während die zweite Anzeigefläche 3b leer bleibt.

Die Figuren 2A und 2B zeigen das Erscheinen der ersten Darstellung 10, wobei ein Einblenden eines ersten Grafikobjekts 11 in Figur 2A mittels gestrichelter Linien angedeutet ist. Das erste Grafikelement 11 ist in dem Ausführungsbeispiel ein Logo eines Fahrzeugherstellers. Alternativ oder zusätzlich können andere Grafikobjekte umfasst sein, etwa ein Profilbild eines Nutzers oder ein anderes Element.

Das Erscheinen des ersten Grafikobjekts 11 wird durch kontinuierliches Ansteigen seiner Helligkeit dargestellt, wobei von einem dunklen Bildschirm der Anzeigefläche 3a ausgegangen wird. Zusätzlich dazu ist in dem Ausführungsbeispiel vorgesehen, dass weitere Lichteffekte im Bereich der Anzeigefläche 3a ausgegeben werden, etwa ein Lichtschimmer, der sich über die Anzeigefläche 3a bewegt. Bei dem in Figur 2B gezeigten Fall ist die erste Darstellung 10 schließlich vollständig auf der ersten Anzeigefläche 3a erschienen.

In weiteren Ausführungsbeispielen kann ein animiertes erstes Grafikobjekt 11 vorgesehen sein, das sich beispielsweise fortwährend bewegt und/oder bei dem sich ein Darstellungsparameter dynamisch ändert, beispielsweise eine Farbe oder Helligkeit.

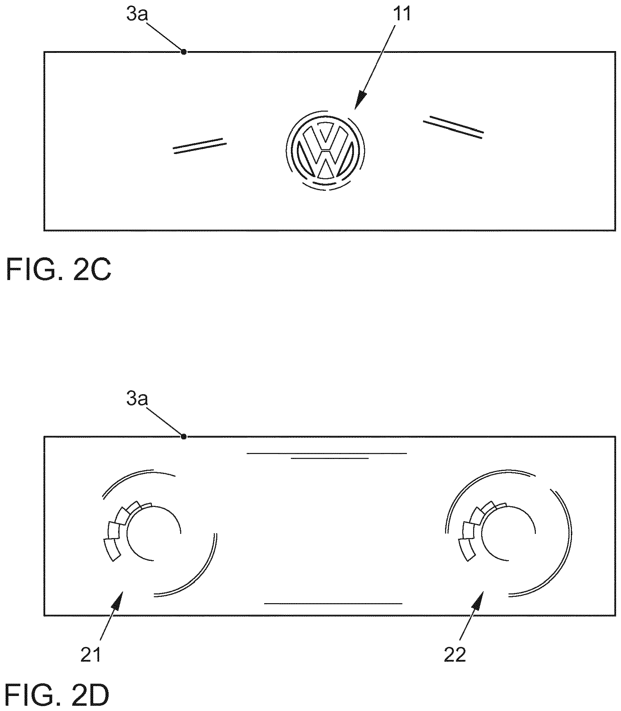

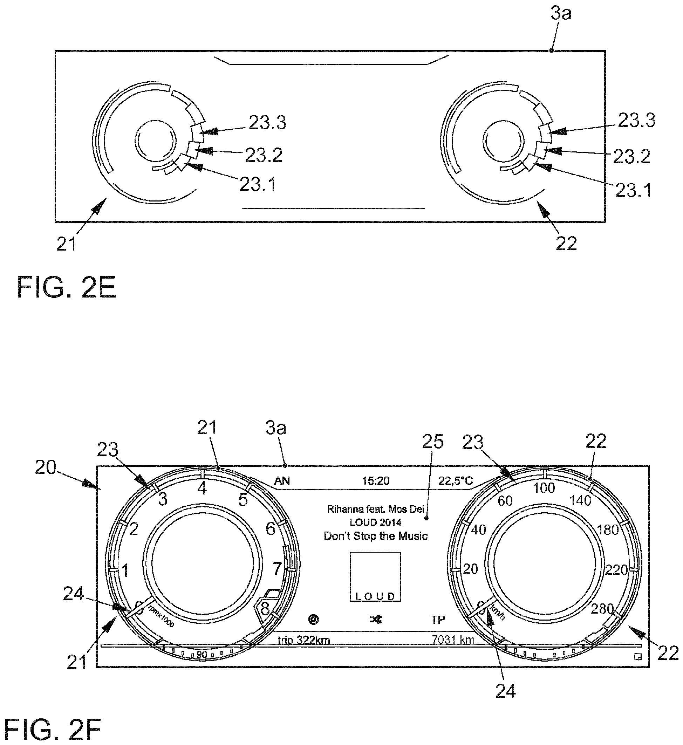

Bei dem in Figur 2C gezeigten Fall wurde ein Übergangssignal empfangen und ein Übergang zur Anzeige der zweiten Darstellung 20 initiiert. Das erste Grafikobjekt 11 verschwindet, was durch ein mittels gestrichelter Linien angedeutetes Ausblenden dargestellt wird. Zugleich erscheint die zweite Darstellung 20, wobei dies durch eine Kombination von Einblenden mit anwachsender Helligkeit und elementarem Aufbau mit einer Bewegung von einzelnen dargestellten Elementen dargestellt wird. Das Erscheinen der zweiten Darstellung umfasst somit einen Bewegungseffekt. Dabei sind in Figur 2D bereits die Umrisse der Anzeigeobjekte 21, 22 der zweiten Darstellung 20 angedeutet. Bei dem in Figur 2E dargestellten Fall wird zudem eine Aufbauanimation für Skalen 23 durch Erscheinen und Verschieben von Skalensegmenten 23.1, 23.2, 23.3 dargestellt: Diese erscheinen im mittleren Bereich der als Rundinstrumente sich bildenden Anzeigeobjekte 21, 22 und bewegen sich dann in einer koordinierten Art von der Mitte hin zum Rand, wo sie eine Zielposition am kreisförmigen Umriss der Anzeigeobjekte 21, 22 einnehmen. Auf diese Weise werden die Skalen 23 stückweise aufgebaut. Bei dem in Figur 2F gezeigten Fall ist für jedes der Anzeigeobjekte 21, 22 ferner ein Zeigerelement 24 erschienen, das in dem Beispiel nach Art eines Lichtstrahls gebildet ist, der eine bestimmte Position der Skala 23 beleuchtet und dadurch einen Wert anzeigt.

Die hier dargestellten Anzeigeobjekte 21, 22 werden nach der Art von Rundinstrumenten gebildet, wie sie in Kombiinstrumenten bekannt sind. Dabei werden die Geschwindigkeit des Fahrzeugs 1 und die Drehzahl eines Motors des Fahrzeugs 1 angezeigt. In weiteren Ausführungsbeispielen können andere Formen und Ausbildungen realisiert werden sowie andere Werte ausgegeben werden. Ferner können mehr als die beiden Anzeigeobjekte 21, 22 vorgesehen sein, beispielsweise ein weiteres Rundinstrument oder ein Objekt zur numerischen Anzeige.

Zwischen den Anzeigeobjekten 21, 22 wird ein Zwischenraum gebildet, der in dem Ausführungsbeispiel als Hintergrunddarstellung ausgebildet ist, wobei die Anzeigeobjekte 21, 22 im Vordergrund angezeigt werden und die Hintergrunddarstellung zu überlagern scheinen. Die Fläche des Zwischenraums dient hier als Anwendungsbereich 25, in dem Ausgabedaten verschiedener Einrichtungen des Fahrzeugs 1 angezeigt werden. Dies kann beispielsweise eine Ausgabe eines Mediaplayers sein, ferner können beispielsweise Ausgabedaten einer Navigation oder anderer Fahrerassistenzsystems ausgegeben werden.

Alternativ oder zusätzlich können in weiteren Ausführungsbeispielen andere Effekte, etwa mittels der farblichen Gestaltung der Anzeige, zum Ausgeben des Erscheinens und Verschwindens von Darstellungen 10, 20 vorgesehen sein.

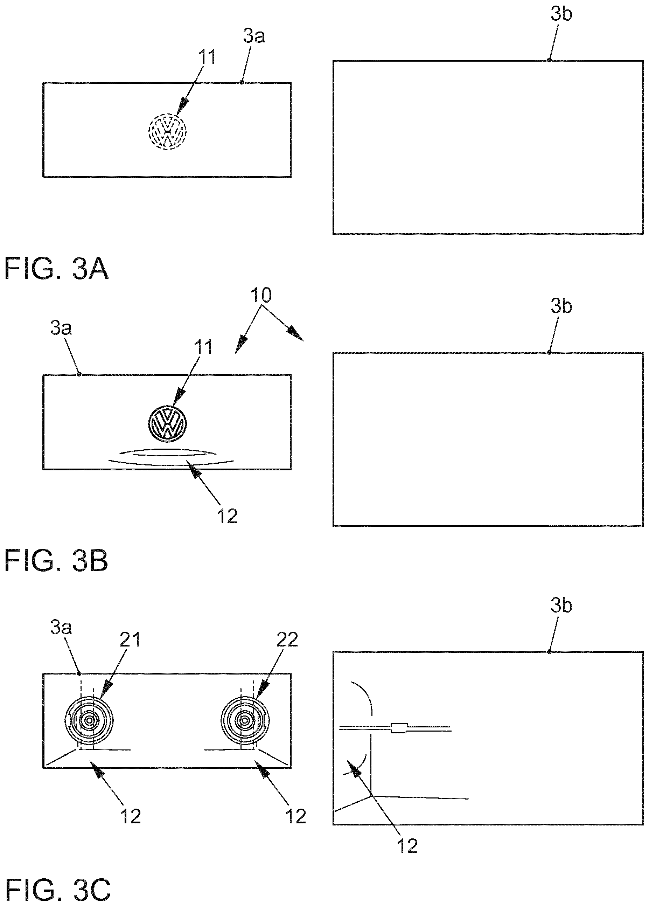

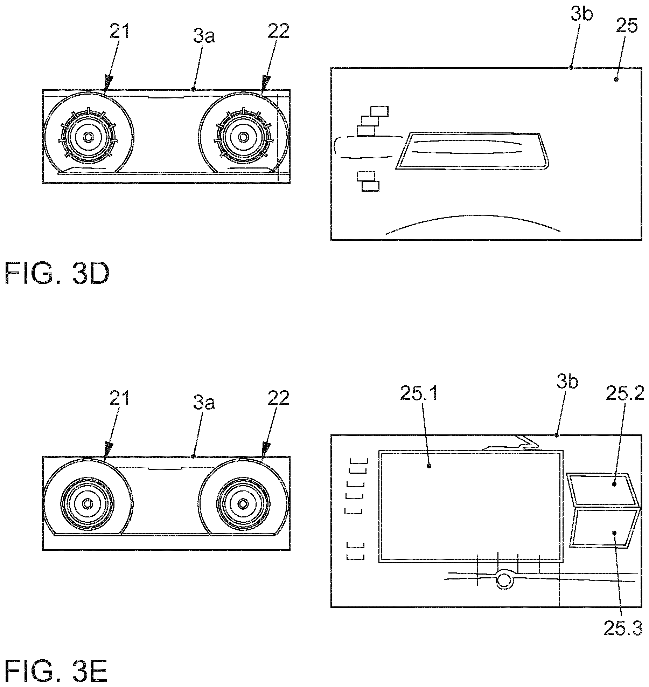

Mit Bezug zu den Figuren 3A bis 3G wird ein Ausführungsbeispiel einer durch das erfindungsgemäße Verfahren erzeugten Anzeige auf zwei Anzeigeflächen erläutert. Dabei wird von dem oben beschriebenen erfindungsgemäßen Fahrzeuginformationssystem und dem erfindungsgemäßen Verfahren zu seinem Betrieb ausgegangen.

Die im Folgenden beschriebene Animation beschreibt ein Aufwachszenario, in welchem das Erscheinen der ersten Darstellung 10 auf der ersten Anzeigefläche 3a, hier ein *Active Info Display*, mit einem Logo als erstem Grafikobjekt 11 angezeigt wird. Ausgehend von dieser ersten Darstellung wird ein Übergang zu der zweiten Darstellung 20 erzeugt, bei dem sich ein Impuls 12 in grafischer Form zur zweiten Anzeigefläche, hier eine *Head Unit*, bewegt.

Dieser Impuls 12 wird synchron in die *Head Unit* weiter geleitet und baut damit die gesamte Struktur der zweiten Darstellung 20 auf. Dabei werden Anwendungsflächen 25.1, 25.2, 25.3 dargestellt, die bestimmten Anwendungen des Rechners 6 zugeordnet sind und auf deren Fläche Ausgabedaten (auch als *Interface*-Inhalte bezeichnet) dieser Anwendungen angezeigt werden können. Die Anwendungsflächen 25.1, 25.2, 25.3 werden dabei zunächst leer dargestellt und bilden dabei ein Gerüst (*Interface*-Struktur), das am Schluss der Animation eine Anordnung der geladenen Ausgabedaten vorgibt.

Die zweite Darstellung ist in dem hier gezeigten Fall eine grafische Bedienoberfläche, wobei insbesondere bei der zweiten Anzeigefläche 3b eine Bedienung mittels einer berührungsempfindlichen Oberfläche erfolgen kann.

In einem ersten Schritt, der in den Figuren 3A und 3b gezeigt ist, wird beim Entriegeln des Fahrzeugs 1 das Aktivierungssignal empfangen und das Erscheinen der ersten Darstellung 10 wird eingeleitet. Die Animationssequenz dazu wird von dem nichtflüchtigen Speichermedium 7 erfasst und läuft im Wesentlichen ab wie oben mit Bezug zu den Figuren 2A bis 2F erläutert. Dabei ist in dem Ausführungsbeispiel vorgesehen, dass lediglich eine Anzeige durch die erste Anzeigefläche 3a erfolgt, während die zweite Anzeigefläche 3b dunkel bleibt.

Im Hintergrund wird der Rechner 6 des Fahrzeugs 1 gestartet und ein Hochfahren ausgeführt. Dabei werden Daten geladen und Programme gestartet. Der zeitliche Ablauf des Ladens wird erfasst und es wird insbesondere bestimmt, bis zu welchem Zeitpunkt das Hochfahren voraussichtlich abgeschlossen sein wird. Das Aufwachszenario wird hier so gebildet, dass es im Wesentlichen gleichzeitig mit dem Hochfahren des Rechners 6 beendet ist.

In einem weiteren Schritt wird beim Schließen der Fahrertür das Übergangssignal empfangen und ein Übergang zu der zweiten Darstellung 20 ausgegeben. Die Darstellung des Übergangs und das Erscheinen der zweiten Darstellung 20 umfassen einen Bewegungseffekt von der ersten 3a zur zweiten Anzeigefläche 3b: Dabei wird ein von dem Bereich des ersten Grafikobjekts 11 ausgehender Lichtimpuls 12 dargestellt, der sich in Richtung der zweiten Anzeigefläche 3b ausbreitet, wobei synchron zur Bewegung des Lichtimpulses 12 ein Erscheinen der zweiten Darstellung 20 angezeigt wird. Dabei wird ein Aufbau vom Zentrum der ersten 3a und zweiten Anzeigefläche 3b her erzeugt.

Der von der ersten Anzeigefläche 3a ausgehende Lichtimpuls 12 wird synchron zu einem bestimmten Zeitpunkt in Richtung der zweiten Anzeigefläche 3b weitergeleitet. Anschließend wird synchron zu der Bewegung des Lichtimpulses 12 die zweite Darstellung 20 aufgebaut.

Insbesondere wird dabei die Anordnung der Anzeigeflächen 3a, 3b im Fahrzeug 1 berücksichtigt, das heißt, die Bewegungsrichtung des Lichtimpulses 12 wird so gebildet, dass im Fahrzeug 1 ein kontinuierlicher Verlauf der Bewegung dargestellt wird.

Dabei wird, wie in den Figuren 3D bis 3F gezeigt, im Bereich der zweiten Anzeigefläche 3b ein Anwendungsbereich 25 gebildet, der Anwendungsflächen 25.1, 25.2, 25.3 umfasst. Diese Anwendungsflächen werden hier als Bedienkacheln dargestellt, wobei diese insbesondere durch eine Drehbewegung erscheinen, wobei ein "Hochklappen" der Bedienkacheln dargestellt wird.

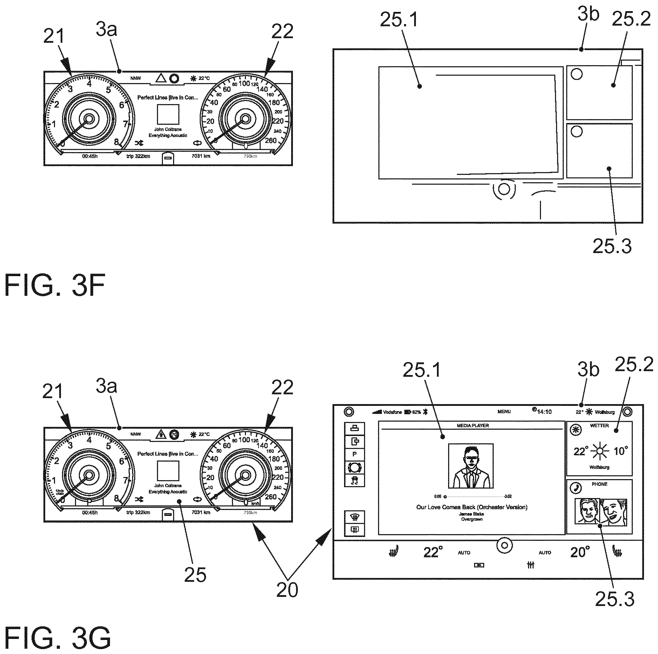

Am Schluss der grafischen Animation bleibt die *Interface*-Struktur ohne Inhalt stehen, es werden insbesondere die Anwendungsflächen 25.1, 25.2, 25.3 als graue Bedienkacheln dargestellt, bei denen keine Ausgabedaten von Anwendungsprogrammen angezeigt werden. Dieser Fall ist in Figur 3F gezeigt. Im Anschluss daran werden, wie in Figur 3G gezeigt, im Bereich der Anwendungsflächen 25.1, 25.2, 25.3 Ausgabedaten von jeweils zugeordneten Anwendungsprogrammen des Rechners 6 angezeigt.

Dabei kann das Verfahren durch eine einheitliche (generische) Animation besonders einfach auf verschiedene Gestaltungen der Bedienoberflächen verschiedener Fahrzeugmodelle angewandt werden. Insbesondere können die erste 10 und zweite Darstellung 20 weitgehend unabhängig von den gerade ausgeführten oder verfügbaren Anwendungsprogrammen gebildet werden, da erste in einem letzten Schritt die Anzeige der Ausgabedaten der Anwendungen erfolgt. Die Anwendungsflächen 25.1, 25.2, 25.3 können dabei als generische Animationsschablone verwendet werden, die auf unterschiedliche Inhalte und Ausgabedaten angepasst werden können. Dabei können vorgegebene Größen für die Anwendungsflächen 25.1, 25.2, 25.3 verwendet werden, die jedoch ohne Inhalt voranimiert werden können und erst am Ende des Verfahrens mit den zu diesem Zeitpunkt geladenen Ausgabedaten der Anwendungen überblendet werden können. Die Anwendungsflächen 25.1, 25.2, 25.3 sind dabei insbesondere als Bedienkacheln beziehungsweise *Interface*-Kacheln ausgebildet.

Durch die Animation des Übergangs von der ersten 10 zur zweiten Darstellung 20 kann eine Überbrückung der Zeitdauer des im Hintergrund laufenden Hochfahrens des Rechners 6 und des Ladevorgangs für die Inhalte erreicht werden, da dieser Vorgang erst nach einer bestimmten Zeitspanne vollständig abgeschlossen ist.

Bei der Animation wird eine Interaktion der beiden Anzeigeflächen 3a, 3b durch eine fließende Bewegung von der ersten 3a zur zweiten Anzeigeflächen 3b ausgegeben. Insbesondere bewegt sich der Lichtimpuls 12 zwischen den Anzeigeflächen 3a, 3b. Hier ist auch die genau koordinierte zeitliche Abstimmung der Anzeigen von Bedeutung, um eine fließende Bewegung zu erreichen.

Der Lichtimpuls 12 kann in verschiedenen Ausführungsbeispielen auf unterschiedliche Weise gebildet werden, wobei verschiedene grafische Elemente genutzt werden können. Beispielsweise kann ein Lichtstrahl dargestellt werden, der sich vom ersten Grafikobjekt 11 aus zu den Seiten der ersten Anzeigefläche 3a bewegt und in der Folge grafische Elemente der zweiten Darstellung 20 "mit sich zieht". Diese grafischen Elemente können etwa quadratische Kacheln sein, die beispielsweise von links nach rechts wandern, es können leuchtende Konturen dargestellt werden, bei denen ein bewegter Lichteffekt um die Umrisse der Anwendungsflächen 25.1, 25.2, 25.3 herum dargestellt wird, oder es kann ein Lichtkegel angezeigt werden, der einen perspektivisch dargestellten "3D-Innenraum" hinter den Bedienkacheln von einer Seite her leuchten lässt und dann zum Ende verschwindet. Beispielsweise kann dabei auch vorgesehen sein, dass die Darstellung je nach Tageszeit in der bestimmten Weise gebildet wird, wobei insbesondere unterschiedliche Lichteffekte verwendet werden können.

### Bezugszeichenliste

- 1: Fahrzeug
- 2: Steuereinheit
- 3a: Erste Anzeigefläche
- 3b: Zweite Anzeigefläche
- 4: Empfangseinheit
- 5: Grafikeinheit
- 6: Rechner
- 7: Nichtflüchtiges Speichermedium
- 10: Erste Darstellung
- 11: Erstes Grafikobjekt
- 12: Lichtimpuls
- 20: Zweite Darstellung
- 21: Erstes Anzeigeobjekt
- 22: Zweites Anzeigeobjekt
- 23: Skala
- 23.1, 23.2, 23.3: Skalensegmente
- 24: Zeigerobjekt
- 25: Anwendungsbereich
- 25.1, 25.2, 25.3: Anwendungsfläche

## Patentansprüche

1. Verfahren zum Betreiben eines Fahrzeuginformationssystems mit zumindest einer ersten (3a) und einer zweiten Anzeigefläche (3b), bei dem
nacheinander ein Aktivierungssignal und ein Übergangssignal empfangen werden;
in Abhängigkeit von dem Aktivierungssignal und dem Übergangssignal Grafikdaten einer Aktivierungsanimation mit einer ersten (10) und einer zweiten Darstellung (20) erzeugt und durch die erste (3a) und zweite Anzeigefläche (3b) angezeigt werden; wobei
nach dem Empfangen des Aktivierungssignals ein Erscheinen der ersten Darstellung (10) ausgegeben wird; wobei
die erste Darstellung (10) ein erstes Grafikobjekt (11) umfasst; und
nach dem Empfangen des Übergangssignals ein Verschwinden der ersten Darstellung (10) und ein Erscheinen der zweiten Darstellung (20) ausgegeben werden; wobei
das Erscheinen der zweiten Darstellung (20) einen Bewegungseffekt umfasst, wobei durch den Bewegungseffekt eine Bewegung von der ersten Anzeigefläche (3a) zu der zweiten Anzeigefläche (3b) dargestellt wird;
**dadurch gekennzeichnet, dass**
das Übergangssignal empfangen wird, wenn ein Annäherungsvorgang, ein Entriegelungsvorgang, ein Türöffnen, ein Einsteigen oder Setzen eines Nutzers oder ein Starten eines Fahrzeugs (1) erfasst wird.

2. Verfahren gemäß Anspruch 1,
**dadurch gekennzeichnet, dass**
das Aktivierungssignal empfangen wird, wenn ein Annäherungsvorgang, ein Entriegelungsvorgang, ein Türöffnen, ein Einsteigen oder Setzen eines Nutzers oder ein Starten eines Fahrzeugs (1) erfasst wird.

3. Verfahren gemäß einem der vorhergehenden Ansprüche,
**dadurch gekennzeichnet, dass**
das Erscheinen der ersten (10) und/oder zweiten Darstellung (20) ein Einblenden umfasst.

4. Verfahren gemäß einem der vorhergehenden Ansprüche,
**dadurch gekennzeichnet, dass**
das erste Grafikobjekt (11) eine Marke umfasst.

5. Verfahren gemäß einem der vorhergehenden Ansprüche,
**dadurch gekennzeichnet, dass**
zum Erzeugen der Grafikdaten der ersten Darstellung (10) eine Animationssequenz von einem nichtflüchtigen Speichermedium (7) abgerufen wird.

6. Verfahren gemäß einem der vorhergehenden Ansprüche,
**dadurch gekennzeichnet, dass**
bei dem Bewegungseffekt eine Bewegung eines Bereichs erhöhter Helligkeit dargestellt wird.

7. Verfahren gemäß einem der vorhergehenden Ansprüche,
**dadurch gekennzeichnet, dass**
das erste Grafikobjekt (11) der ersten Darstellung (10) durch die erste Anzeigefläche (3a) angezeigt wird.

8. Verfahren gemäß einem der vorhergehenden Ansprüche,
**dadurch gekennzeichnet, dass**
die zweite Darstellung (20) durch die erste (3a) und die zweite Anzeigefläche (3b) angezeigt wird.

9. Verfahren gemäß einem der vorhergehenden Ansprüche,
**dadurch gekennzeichnet, dass**
die zweite Darstellung (20) ein erstes (21) und ein zweites Anzeigeobjekt (22) umfasst, wobei die Anzeigeobjekte (21, 22) jeweils eine Skala (23) und ein Zeigerelement (24) aufweisen.

10. Verfahren gemäß einem der vorhergehenden Ansprüche,
**dadurch gekennzeichnet, dass**
ferner Betriebsdaten eines Fahrzeugs (1) erfasst werden und die zweite Darstellung (20) in Abhängigkeit von den erfassten Betriebsdaten erzeugt wird.

11. Verfahren gemäß einem der vorhergehenden Ansprüche,
**dadurch gekennzeichnet, dass**
die erste Anzeigefläche (3a) von einem Kombiinstrument eines Fahrzeugs (1) und/oder die zweite Anzeigefläche (3b) von einem Mitteldisplay des Fahrzeugs (1) umfasst ist.

12. Verfahren gemäß einem der vorhergehenden Ansprüche,
**dadurch gekennzeichnet, dass**
während des Anzeigens der Aktivierungsanimation ein Startvorgang eines Rechners (6) durchgeführt wird, wobei die Aktivierungsanimation in Abhängigkeit von einem zeitlichen Ablauf des Startvorgangs erzeugt und angezeigt wird.

13. Verfahren gemäß einem der vorhergehenden Ansprüche,
**dadurch gekennzeichnet, dass**
die zweite Darstellung (20) zumindest ein Anzeigeobjekt (21, 22) und einen Anwendungsbereich (25) umfasst, wobei
der Anwendungsbereich (25) Anwendungsflächen (25.1, 25.2, 25.3) umfasst.

14. Verfahren gemäß Anspruch 13,
**dadurch gekennzeichnet, dass**
die Anwendungsflächen (25.1, 25.2, 25.3) der zweiten Darstellung (20) Anwendungen zugeordnet werden und
nach dem Erscheinen der zweiten Darstellung (20) in den Anzeigeflächen (25.1, 25.2, 25.3) Ausgabedaten der Anwendungen angezeigt werden.

15. Fahrzeuginformationssystem mit
einer Empfangseinheit (4), durch die ein Aktivierungssignal und ein Übergangssignal empfangbar sind;
einer Grafikeinheit (5), durch die in Abhängigkeit von dem Aktivierungssignal und dem Übergangssignal Grafikdaten einer Aktivierungsanimation mit einer ersten (10) und einer zweiten Darstellung (20) erzeugbar sind;
einer ersten (3a) und einer zweiten Anzeigefläche (3b), durch welche die Grafikdaten anzeigbar sind; wobei
nach dem Empfangen des Aktivierungssignals ein Erscheinen der ersten Darstellung (10) ausgebbar ist, wobei die erste Darstellung (10) ein erstes Grafikobjekt (11) umfasst; und
nach dem Empfangen des Übergangssignals ein Verschwinden der ersten Darstellung (10) und ein Erscheinen der zweiten Darstellung (20) ausgebbar ist; wobei
das Erscheinen der zweiten Darstellung (20) einen Bewegungseffekt umfasst, wobei durch den Bewegungseffekt eine Bewegung von der ersten Anzeigefläche (3a) zu der zweiten Anzeigefläche (3b) darstellbar ist;
**dadurch gekennzeichnet, dass**
das Übergangssignal empfangen wird, wenn ein Annäherungsvorgang, ein Entriegelungsvorgang, ein Türöffnen, ein Einsteigen oder Setzen eines Nutzers oder ein Starten eines Fahrzeugs (1) erfasst wird.

## Claims

1. Method for operating a vehicle information system comprising at least a first display area (3a) and a second display area (3b), in which method:
an activation signal and a transition signal are received in succession;
graphical data for an activation animation containing a first view (10) and a second view (20) is generated on the basis of the activation signal and the transition signal and displayed by the first display area (3a) and second display area (3b); wherein
after the activation signal has been received, an appearing of the first view (10) is output; wherein
the first view (10) comprises a first graphical object (11); and
after the transition signal has been received, a disappearing of the first view (10) and an appearing of the second view (20) are output; wherein
the appearing of the second view (20) comprises a movement effect, wherein said movement effect depicts a movement from the first display area (3a) to the second display area (3b),
**characterized in that**
the transition signal is received when an approach action, an unlocking action, a door-opening, a user entering or sitting down or a vehicle (1) being started is detected.

2. Method according to Claim 1,
**characterized in that**
the activation signal is received when an approach action, an unlocking action, a door-opening, a user entering or sitting down or a vehicle (1) being started is detected.

3. Method according to any of the preceding claims,
**characterized in that**
the appearing of the first view (10) and/or second view (20) involves a fade-in.

4. Method according to any of the preceding claims,
**characterized in that**
the first graphical object (11) comprises a trademark.

5. Method according to any of the preceding claims,
**characterized in that**
an animation sequence is retrieved from a nonvolatile storage medium (7) in order to generate the graphical data for the first view (10).

6. Method according to any of the preceding claims,
**characterized in that**
the movement effect comprises depicting a movement of a region of heightened brightness.

7. Method according to any of the preceding claims,
**characterized in that**
the first graphical object (11) of the first view (10) is displayed by the first display area (3a).

8. Method according to any of the preceding claims,
**characterized in that**
the second view (20) is displayed by the first display area (3a) and the second display area (3b).

9. Method according to any of the preceding claims,
**characterized in that**
the second view (20) comprises a first display object (21) and a second display object (22), wherein the display objects (21, 22) each comprise a dial (23) and a pointer element (24).

10. Method according to any of the preceding claims,
**characterized in that**
in addition, operating data of a vehicle (1) is acquired, and the second view (20) is generated on the basis of the acquired operating data.

11. Method according to any of the preceding claims,
**characterized in that**
an instrument cluster of a vehicle (1) comprises the first display area (3a), and/or a centre console display of the vehicle (1) comprises the second display area (3b).

12. Method according to any of the preceding claims,
**characterized in that**
during the display of the activation animation, a start-up procedure of a computer (6) is performed, in which procedure the activation animation is generated according to a progress over time of the start-up procedure and displayed.

13. Method according to any of the preceding claims,
**characterized in that**
the second view (20) comprises at least one display object (21, 22) and an application region (25), wherein
the application region (25) comprises application areas (25.1, 25.2, 25.3).

14. Method according to Claim 13,
**characterized in that**
the application areas (25.1, 25.2, 25.3) of the second view (20) are associated with applications, and
output data from the applications is displayed in the display areas (25.1, 25.2, 25.3) after the second view (20) has appeared.

15. Vehicle information system comprising
a receive unit (4), which can be used to receive an activation signal and a transition signal;
a graphics unit (5), which can be used to generate, on the basis of the activation signal and the transition signal, graphical data for an activation animation comprising a first view (10) and a second view (20);
a first display area (3a) and a second display area (3b), which can be used to display the graphical data; wherein
after the activation signal has been received, an appearing of the first view (10) can be output, wherein the first view (10) comprises a first graphical object (11); and
after the transition signal has been received, a disappearing of the first view (10) and an appearing of the second view (20) can be output; wherein
the appearing of the second view (20) comprises a movement effect, wherein said movement effect can depict a movement from the first display area (3a) to the second display area (3b),
**characterized in that**
the transition signal is received when an approach action, an unlocking action, a door-opening, a user entering or sitting down or a vehicle (1) being started is detected.

## Revendications

1. Procédé pour faire fonctionner un système d'informations de véhicule, comprenant au moins une première (3a) et une deuxième surface d'affichage (3b), dans lequel
un signal d'activation et un signal de transition sont reçus successivement ;
en fonction du signal d'activation et du signal de transition, des données graphiques d'une animation d'activation avec une première (10) et une deuxième représentation (20) sont produites et sont affichées par la première (3a) et la deuxième surface d'affichage (3b) ; dans lequel
après la réception du signal d'activation, l'apparition de la première représentation (10) est sortie ; dans lequel
la première représentation (10) comprend un premier objet graphique (11) ; et
après la réception du signal de transition, une disparition de la première représentation (10) et une apparition de la deuxième représentation (20) sont sorties ; dans lequel
l'apparition de la deuxième représentation (20) comprend un effet de mouvement, l'effet de mouvement représentant un passage de la première surface d'affichage (3a) à la deuxième surface d'affichage (3b) ;
**caractérisé en ce que** le signal de transition est reçu si une opération d'approche, une opération de déverrouillage, une ouverture de portière, le fait qu'un utilisateur monte ou s'installe ou un démarrage d'un véhicule (1) est détecté(e).

2. Procédé selon la revendication 1, **caractérisé en ce que** le signal d'activation est reçu si une opération d'approche, une opération de déverrouillage, une ouverture de portière, le fait qu'un utilisateur monte ou s'installe ou un démarrage du véhicule (1) est détecté(e) .

3. Procédé selon l'une quelconque des revendications précédentes, **caractérisé en ce que** l'apparition de la première (10) et/ou de la deuxième représentation (20) comprend une incrustation.

4. Procédé selon l'une quelconque des revendications précédentes, **caractérisé en ce que** le premier objet graphique (11) comprend une marque.

5. Procédé selon l'une quelconque des revendications précédentes, **caractérisé en ce qu'**une séquence d'animation est extraite d'un support de stockage non volatile (7) pour produire les données graphiques de la première représentation (10).

6. Procédé selon l'une quelconque des revendications précédentes, **caractérisé en ce que** l'effet de mouvement représente un mouvement d'une plage de luminosité accrue.

7. Procédé selon l'une quelconque des revendications précédentes, **caractérisé en ce que** le premier objet graphique (11) de la première représentation (10) est affiché par la première surface d'affichage (3a).

8. Procédé selon l'une quelconque des revendications précédentes, **caractérisé en ce que** la deuxième représentation (20) est affichée par la première (3a) et la deuxième surface d'affichage (3b).

9. Procédé selon l'une quelconque des revendications précédentes, **caractérisé en ce que** la deuxième représentation (20) comprend un premier (21) et un deuxième objet d'affichage (22), les objets d'affichage (21, 22) présentant respectivement une graduation (23) et un élément à aiguille (24).

10. Procédé selon l'une quelconque des revendications précédentes, **caractérisé en ce qu'**en outre des données de fonctionnement d'un véhicule (1) sont détectées et la deuxième représentation (20) est produite en fonction des données de fonctionnement détectées.

11. Procédé selon l'une quelconque des revendications précédentes, **caractérisé en ce que** la première surface d'affichage (3a) est comprise dans un instrument combiné d'un véhicule (1) et/ou la deuxième surface d'affichage (3b) est comprise dans un affichage central du véhicule (1).

12. Procédé selon l'une quelconque des revendications précédentes, **caractérisé en ce que** pendant l'affichage de l'animation d'activation, une opération de démarrage d'un ordinateur (6) est effectuée, l'animation d'activation étant produite et affichée en fonction d'un déroulement dans le temps de l'opération de démarrage.

13. Procédé selon l'une quelconque des revendications précédentes, **caractérisé en ce que**
la deuxième représentation (20) comprend au moins un objet d'affichage (21, 22) et une zone d'application (25), dans lequel
la zone d'application (25) comprend des surfaces d'application (25.1, 25.2, 25.3).

14. Procédé selon la revendication 13, **caractérisé en ce que**
des applications sont associées aux surfaces d'application (25.1, 25.2, 25.3) de la deuxième représentation (20), et
des données de sortie des applications sont affichées après l'apparition de la deuxième représentation (20) sur les surfaces d'affichage (25.1, 25.2, 25.3).

15. Système d'informations de véhicule, comprenant
une unité de réception (4) permettant de recevoir un signal d'activation et un signal de transition ;
une unité graphique (5) permettant en fonction du signal d'activation et du signal de transition de produire des données graphiques d'une animation d'activation avec une première (10) et une deuxième représentation (20) ;
une première (3a) et une deuxième surface d'affichage (3b) permettant d'afficher les données graphiques ; dans lequel
après la réception du signal d'activation, une apparition de la première représentation (10) peut être sortie, la première représentation (10) comprenant un premier objet graphique (11) ; et
après la réception du signal de transition, une disparition de la première représentation (10) et une apparition de la deuxième représentation (20) peuvent être sorties ; dans lequel
l'apparition de la deuxième représentation (20) comprend un effet de mouvement, l'effet de mouvement permettant de représenter un passage de la première surface d'affichage (3a) à la deuxième surface d'affichage (3b) ;
**caractérisé en ce que** le signal de transition est reçu si une opération d'approche, une opération de déverrouillage, une ouverture de portière ou le fait qu'un utilisateur monte ou s'installe ou un démarrage d'un véhicule (1) est détecté(e).
